# DEMANDE DE BREVET EUROPEEN

(11) **EP 1 079 159 A1**
(43) Date de publication de la demande: **28.02.2001**
(21) Numéro de dépôt: 00202993.2
(22) Date de dépôt: 18.08.2000
(51) Int. Cl.: F16K 35/02

(54) **Vanne manuelle**

(30) Priorité: 23.08.1999 FR 9910767
(71) Demandeur: SOLVAY (Société Anonyme), 1050 Bruxelles (BE)
(72) Inventeur: Gerard, Michel, 39800 Colonne (FR)
(74) Mandataire: Vande Gucht, Anne

(57) **Abrégé**

Vanne manuelle, comprenant un dispositif d'obturation (1) capable d'influencer le débit d'un fluide dans un conduit dans lequel est installé la vanne, ainsi qu'un dispositif de sécurité (2), ledit dispositif d'obturation (1) pouvant être déplacé par un opérateur par l'intermédiaire d'un organe de commande (3) pivotant autour d'un axe, caractérisée en ce qu'un pivotement de l'organe de commande (3) ne provoque un déplacement du dispositif d'obturation (1) que lorsque le dispositif de sécurité (2) est actionné par l'opérateur, alors que l'organe de commande (3) peut pivoter librement sans provoquer un déplacement du dispositif d'obturation (1) lorsque ledit dispositif de sécurité (2) n'est pas actionné

## Description

La présente invention concerne une vanne à commande manuelle, utilisable notamment dans les appareillages et installations chimiques.

Dans les installations chimiques industrielles notamment, les vannes manuelles destinées à contrôler l'écoulement de fluides constituent des dispositifs simples mais capitaux, que le personnel est généralement amené à manoeuvrer fréquemment, et qui peuvent être à l'origine d'incidents ou accidents graves en cas de manipulation incorrecte. Il importe donc de développer des vannes manuelles dont la position ne puisse pas être modifiée involontairement, par exemple sous l'effet du contact involontaire d'une personne avec le volant ou le levier servant à actionner la vanne.

De nombreuses solutions ont déjà été proposées dans ce but. Par exemple, le document US 5598724 décrit une vanne manuelle dont le levier de commande, en l'absence de sollicitation extérieure, est empêché de pivoter grâce à un ergot de blocage s'engageant dans l'une des encoches pratiquées dans un disque fixé rigidement au corps de la vanne, ce disque étant concentrique à l'axe de rotation du levier de commande. Pour manoeuvrer cette vanne, il est nécessaire d'appuyer sur une poignée de déblocage, de façon à dégager ledit ergot de l'encoche.

Ce dispositif présente plusieurs inconvénients. En effet, en temps normal (c'est-à-dire lorsqu'aucune force n'est exercée sur la poignée de déblocage), le levier de commande de la vanne est bloqué dans une position fixe par rapport à l'installation sur laquelle la vanne est montée. Etant donné que les vannes manuelles sont la plupart du temps installées en des endroits où le personnel est susceptible de circuler (pour des raisons évidentes d'accès aux vannes manuelles ou travaux à effectuer à proximité notamment), la présence d'un levier susceptible d'être immobilisé dans différentes positions, présentant généralement une forme allongée, constitue un danger pour la sécurité du personnel, qui risque de se heurter à ce levier et d'être victime de lésions potentiellement graves et/ou douloureuses. Un autre inconvénient, potentiellement plus lourd de conséquences encore, est que le dispositif de blocage n'est généralement pas d'une solidité extrême, et que le choc d'une personne, d'un véhicule ou d'un autre objet avec le levier peut avoir pour conséquence d'endommager ou de détruire le levier, d'une façon telle que le levier (ou ce qu'il en reste) soit alors capable de se déplacer librement (que ce soit sous l'effet de ce même choc ou d'autres influences ultérieures), ce qui peut modifier de manière non désirée l'écoulement du fluide dans la tuyauterie sur laquelle est montée la vanne. Il est clair que dans une installation chimique industrielle, l'interruption ou l'établissement intempestif d'un débit de fluide peut avoir des conséquences dramatiques.

Il serait certes envisageable de réduire les dimensions de l'organe de commande de la vanne (longueur du levier, etc.), mais ceci en rendrait la manipulation plus difficile.

La présente invention vise dès lors à fournir une vanne manuelle qui ne présente pas ces inconvénients.

A cette fin, la présente invention concerne une vanne manuelle, comprenant un dispositif d'obturation (1) capable d'influencer le débit d'un fluide dans un conduit dans lequel est installé la vanne, ainsi qu'un dispositif de sécurité (2), ledit dispositif d'obturation (1) pouvant être déplacé par un opérateur par l'intermédiaire d'un organe de commande (3) pivotant autour d'un axe, caractérisée en ce qu'un pivotement de l'organe de commande (3) ne provoque un déplacement du dispositif d'obturation (1) que lorsque le dispositif de sécurité (2) est actionné par l'opérateur, alors que l'organe de commande (3) peut pivoter librement sans provoquer un déplacement du dispositif d'obturation (1) lorsque ledit dispositif de sécurité (2) n'est pas actionné.

Par vanne, on entend désigner tout dispositif permettant d'influencer - en particulier d'interrompre - le débit d'un fluide dans un conduit (tuyauterie, etc.) sur lequel il est installé. De nombreux types de vannes sont bien connus de l'homme du métier, par exemple des vannes comprenant un tronçon cylindrique de tuyauterie dans lequel est disposé un dispositif d'obturation constitué d'un clapet métallique en forme de disque capable de pivoter autour d'un axe diamétral perpendiculaire à l'axe dudit tronçon de tuyauterie. Par vanne "manuelle", on entend désigner une vanne destinée à être manoeuvrée par un opérateur humain, par opposition aux vannes dont le dispositif d'obturation est déplacé par un actionneur électrique, pneumatique ou autre. La vanne manuelle est équipée d'un organe de commande rotatif permettant à un opérateur de la manoeuvrer, cet organe consistant généralement en un levier ou volant, capable de pivoter autour d'un axe de rotation, lequel axe peut être relié au dispositif d'obturation de manière directe ou indirecte (par exemple par l'intermédiaire d'engrenages). Certains types de vannes comprennent un axe muni d'un filetage, permettant de déplacer axialement le dispositif d'obturation (fixé audit axe) en imprimant un mouvement de rotation à l'axe. Il est donc possible que l'axe de rotation subisse, outre une rotation, également une légère translation axiale.

Dans une variante particulière, l'organe de commande comprend au moins un levier de commande (3) substantiellement perpendiculaire à son axe de rotation. Dans une autre variante, l'organe de commande (3) comprend un volant.

La particularité du dispositif de sécurité de la vanne de l'invention est qu'il est conçu de sorti que s'il n'est pas actionné par un opérateur, non seulement il est impossible d'agir sur la position du dispositif d'obturation, mais de plus l'organe de commande est libre de pivoter autour de son axe, sans offrir de résistance en cas de choc intempestif. Comme évoqué ci-dessus, cette particularité offre des avantages considérables non seulement sur le plan de la sécurité des opérateurs, mais évite en outre tout déréglage accidentel de la vanne, et réduit le risque qu'elle soit endommagée en cas de choc. Avantageusement, le dispositif de sécurité (2) est muni de moyens de rappel garantissant que l'organe de commande (3) peut pivoter librement sans provoquer un déplacement du dispositif d'obturation (1) lorsque ledit dispositif de sécurité (2) n'est pas actionné.

Selon une première variante, la vanne comprend une pièce d'accouplement (4) concentrique à l'axe de rotation, dont la position détermine de manière univoque la position du dispositif d'obturation (1), et le dispositif de sécurité comprend un levier de sécurité (2) capable de se déplacer approximativement parallèlement à l'axe de rotation, de telle façon que l'organe de commande (3) puisse pivoter indépendamment de la pièce d'accouplement (4) et donc sans provoquer le déplacement du dispositif d'obturation (1) lorsque le levier de sécurité (2) n'est soumis à aucune force extérieure, alors que le pivotement de l'organe de commande (3) provoque le pivotement de la pièce d'accouplement (4) et donc le déplacement du dispositif d'obturation (1) lorsque le levier de sécurité (2) est actionné par un opérateur.. A cette fin, la pièce d'accouplement est généralement munie d'encoches dans lesquelles peut s'engager une pièce reliée au levier de sécurité (par exemple une extrémité du levier) lorsque celui-ci est actionné. La pièce d'accouplement peut notamment être fixée concentriquement à l'axe de rotation ou en faire partie intégrante.

Dans une forme d'exécution particulière de cette variante, l'organe de commande comprend au moins un levier de commande (3) substantiellement perpendiculaire à son axe de rotation, et le pivotement de l'organe de commande (3) provoque le pivotement de la pièce d'accouplement (4) et donc le déplacement du dispositif d'obturation (1) lorsque les extrémités du levier de commande (3) et du levier de sécurité (2) sont rapprochées. Des moyens de rappel tel qu'un ressort sont avantageusement utilisé pour maintenir écartées les extrémités des leviers de commande et de sécurité en l'absence de sollicitation extérieure sur le levier de sécurité, permettant ainsi au levier de commande de pivoter librement sans provoquer le déplacement du dispositif d'obturation.

Si un niveau de sécurité particulièrement élevé est nécessaire, il est possible de recourir à des méthodes bien connues, par exemple en munissant le levier de sécurité d'un dispositif de blocage, à clef ou autre.

Selon une seconde variante, comprenant une pièce d'accouplement (4') concentrique audit axe de rotation, dont la position détermine de manière univoque la position dudit dispositif d'obturation (1), et dans laquelle le dispositif de sécurité comprend une plaque de sécurité (2) capable de se déplacer approximativement parallèlement à l'axe de rotation, de telle façon que l'organe de commande (3') puisse pivoter indépendamment de la pièce d'accouplement (4') et donc sans provoquer le déplacement du dispositif d'obturation (1) lorsque la plaque de sécurité (2') n'est soumise à aucune force extérieure, alors que le pivotement de l'organe de commande (3') provoque le pivotement de la pièce d'accouplement (4') et donc le déplacement du dispositif d'obturation (1) lorsque la plaque de sécurité (2') est actionnée par un opérateur de façon à ce qu'elle se rapproche de l'organe de commande (3'). A cette fin, la pièce d'accouplement est généralement de forme substantiellement cylindrique, et porte sur sa face supérieure des encoches dans lesquelles peuvent s'engager des protubérances fixées à la plaque de sécurité. Ici également, la pièce d'accouplement peut notamment être fixée concentriquement à l'axe de rotation ou en faire partie intégrante.

Des moyens de rappel tels qu'un ou plusieurs ressorts sont avantageusement utilisés pour maintenir écartées la plaque de sécurité et l'organe de commande en l'absence de sollicitation extérieure sur la plaque de sécurité, permettant ainsi à l'organe de commande de pivoter librement sans provoquer le déplacement du dispositif d'obturation.

Selon une troisième variante, la vanne comprend une pièce d'accouplement (4'') substantiellement cylindrique, concentrique à l'axe de rotation, dont la position détermine de manière univoque la position du dispositif d'obturation (1), présentant une gorge circulaire (7) comportant des élargissements localisés (5), et le dispositif de sécurité comprend un levier de sécurité (2'') capable de coulisser perpendiculairement à l'axe de rotation, muni d'une protubérance (6) s'engageant dans la gorge (7) de telle façon que:
- lorsque le levier de sécurité (2'') n'est soumis à aucune force extérieure, la protubérance (6) peut circuler librement dans la gorge (7), et l'organe de commande (3'') peut donc pivoter indépendamment de la pièce d'accouplement (4''), sans provoquer le déplacement du dispositif d'obturation (1), alors que
- lorsque le lesier de sécurité (2'') est déplacé par un opérateur de façon à ce qu'il s'éloigne de l'axe de rotation, la protubérance (6) s'engage dans un élargissement localisé (5) de la gorge (7), de telle sorte qu'un déplacement de l'organe de l'organe de commande (3'') provoque le pivotement de la pièce d'accouplement (4'') et donc le déplacement du dispositif d'obturation (1).

Des moyens de rappel tels qu'un ou plusieurs ressorts sont avantageusement utilisés pour maintenir le levier de sécurité dans sa position la plus proche de l'axe de rotation en l'absence de sollicitation extérieure.

Cette troisième variante s'applique aussi bien aux cas où l'organe de commande comprend un levier qu'à ceux où l'organe de commande comprend un volant.

### DESCRIPTION DES DESSINS

Les figures annexées illustrent, de façon non limitative, différentes variantes de réalisation de la vanne de l'invention. Ces figures sont schématiques, et ne reprennent pas certains éléments secondaires tels que par exemple des joints d'étanchéité.

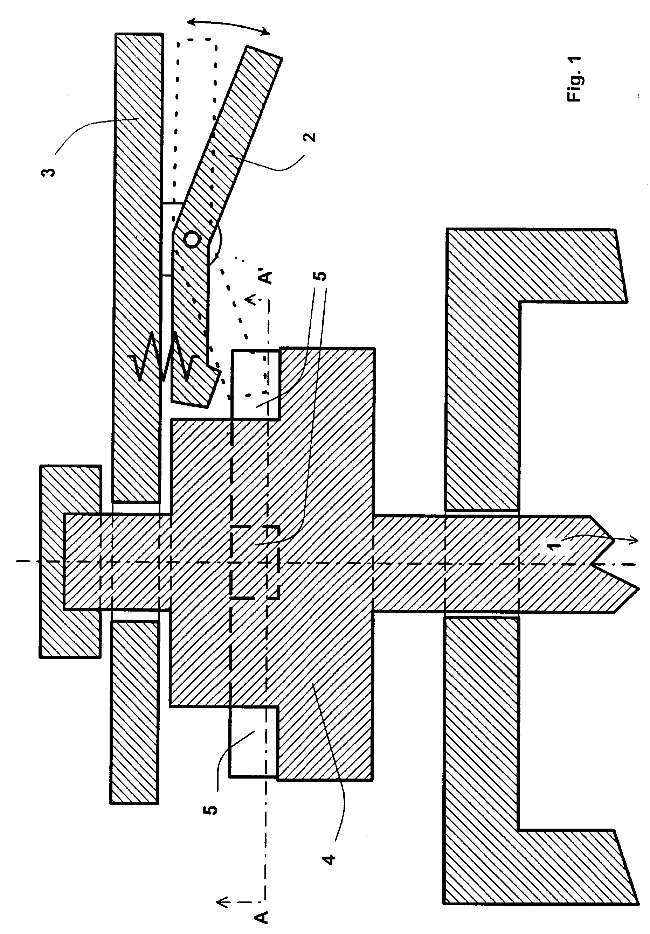

La figure 1 représente en coupe une vanne selon l'invention, ou plus précisément son dispositif de commande et de sécurité. Pour des raisons de simplicité et de clarté, le dispositif d'obturation n'a pas été reproduit, de même que la canalisation dans laquelle il est disposé; seul est visible l'axe de rotation, qui est raccordé de manière directe ou indirecte au dispositif d'obturation proprement dit (1). L'organe de commande est constitué d'un levier de commande (3) perpendiculaire à l'axe de rotation relié au dispositif d'obturation (1). Le dispositif de sécurité comprend un levier de sécurité (2), dont une première extrémité est capable de s'engager dans des encoches (5) pratiquées à la périphérie d'une pièce d'accouplement (4) cylindrique fixée concentriquement à l'axe de rotation (1) ou en faisant partie intégrante. En l'absence de sollicitation extérieure exercée sur le levier de sécurité (2), cette première extrémité ne s'engage pas dans lesdites encoches, de sorte que le levier de commande (3) peut pivoter librement (situation représentée en traits pleins). Lorsqu'un opérateur appuie sur la seconde extrémité du levier de sécurité (2) de manière à la rapprocher de l'extrémité du levier de commande (3), la première extrémité du levier de sécurité (2) s'engage dans l'une des encoches (5) de la pièce d'accouplement (4) et à partir de ce moment (tant que le levier de sécurité est maintenu dans cette position) les déplacements du levier de commande (3) sont transmis au dispositif d'obturation, ce qui permet à l'opérateur de manoeuvrer la vanne (situation représentée en pointillés). Le dispositif de sécurité comprend un ressort de rappel (représenté schématiquement) assurant qu'en l'absence de sollicitation extérieure, le levier de sécurité (2) ne coopère pas avec la pièce d'accouplement.

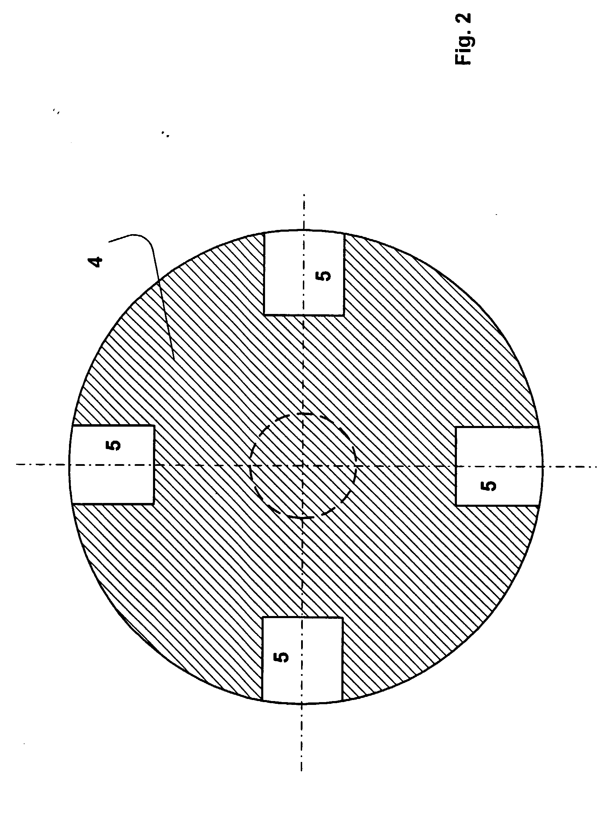

La figure 2 représente la coupe AA' de la pièce d'accouplement (4) de la figure 1.

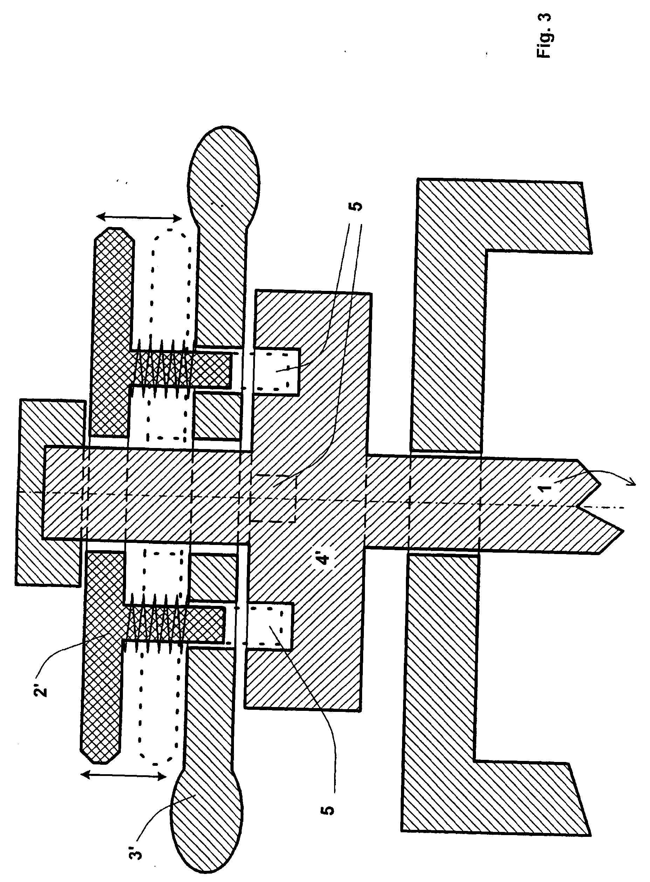

La figure 3 représente une autre vanne conforme à l'invention. Son organe de commande est constitué par un volant circulaire (3') perpendiculaire à l'axe de rotation, qui est relié directement ou indirectement au dispositif d'obturation (1). Cet axe porte une pièce d'accouplement cylindrique (4') qui lui est fixée concentriquement. Cette pièce (4') est munie de trous (5) parallèles à l'axe de rotation (1), dans lesquels peuvent s'engager des protubérances fixées sous une plaque de sécurité (2') parallèle au volant (3'). En l'absence de sollicitation extérieure, la plaque (2') est maintenue écartée du volant (3'), par des ressorts (représentés schématiquement), et ne coopère pas avec la pièce d'accouplement (4') (situation représentée en traits pleins). Lorsqu'un opérateur appuie sur la plaque (2') de façon à la rapprocher du volant (3'), les protubérances qui y sont fixées s'engagent dans les trous (5) de la pièce (4') et permettent de manoeuvrer le dispositif d'obturation (1) (situation représentée en pointillés).

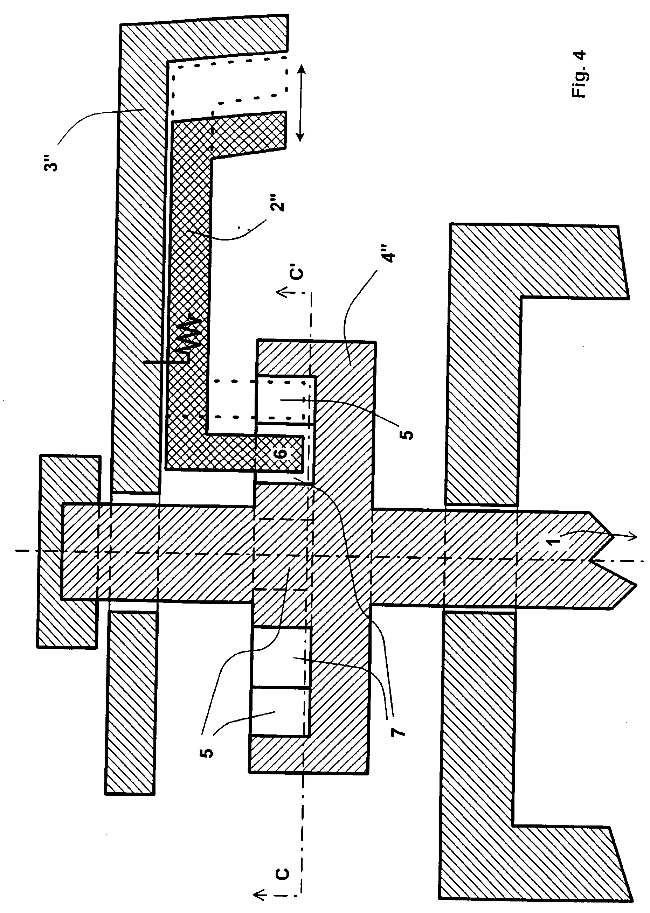

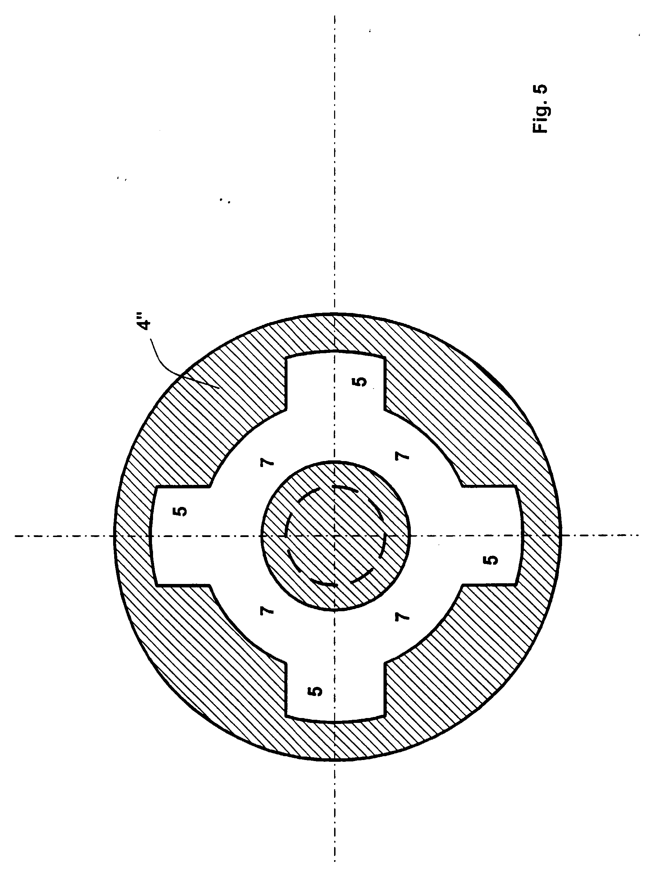

La figure 4 représente une autre vanne conforme à l'invention. Son organe de commande est constitué d'un levier de commande (3'') perpendiculaire à l'axe de rotation (1). Celui-ci porte une pièce d'accouplement (4'') cylindrique fixée concentriquement à cet axe. Cette pièce (4'') est munie d'une gorge circulaire (7) présentant par endroits des élargissements localisés (5), constituant des encoches pratiquées dans la paroi extérieure de ladite gorge (cf. fig. 5). Le dispositif de sécurité comprend un levier de sécurité (2'') capable de coulisser parallèlement au levier de commande (3) au moyen d'éléments de guidage non-représentés. Sa première extrémité - la plus proche de l'axe de rotation - est munie d'une protubérance (6) parallèle audit axe, qui peut se déplacer dans la gorge (7) pratiquée dans la pièce d'accouplement (4''). Lorsqu'aucune sollicitation n'est exercée sur le levier de sécurité, le pivotement du levier de commande (3'') ne provoque aucun déplacement du dispositif d'obturation (1) (situation représentée en traits pleins). Lorsqu'un opérateur exerce une traction sur le levier de sécurité (2'') de manière à ce que sa second extrémité se rapproche de l'extrémité du levier de commande (3''), la protubérance (6) s'engage dans l'un des élargissements (encoches latérales) (5) de la gorge (7) ce qui permet de manoeuvrer le dispositif d'obturation en agissant sur le levier de commande (3'') (situation représentée en pointillés). Le levier de sécurité (2'') est maintenu dans sa position "inactive^{"} (représentée en traits pleins) par un ressort de rappel (représenté de manière schématique) le reliant au levier de commande (3'').
La figure 5 représente la coupe CC' de la pièce d'accouplement (4'') de la figure 4.

## Revendications

1. Vanne manuelle, comprenant un dispositif d'obturation (1) capable d'influencer le débit d'un fluide dans un conduit dans lequel est installé la vanne, ainsi qu'un dispositif de sécurité (2), ledit dispositif d'obturation (1) pouvant être déplacé par un opérateur par l'intermédiaire d'un organe de commande (3) pivotant autour d'un axe, et comprenant au moins un levier de commande (3) substantiellement perpendiculaire à cet axe, caractérisée en ce que la vanne comprend en outre une pièce d'accouplement (4) concentrique à l'axe de rotation, dont la position détermine de manière univoque la position du dispositif d'obturation (1), et en ce que le dispositif de sécurité comprend un levier de sécurité (2) capable de se déplacer par rapport à l'organe de commande de telle façon que l'organe de commande (3) puisse pivoter indépendamment de la pièce d'accouplement (4) et donc sans provoquer le déplacement du dispositif d'obturation (1) lorsque le levier de sécurité (2) n'est soumis à aucune force extérieure, alors que le pivotement de l'organe de commande (3) provoque le pivotement de la pièce d'accouplement (4) et donc le déplacement du dispositif d'obturation (1) lorsque le levier de sécurité (2) est actionné par un opérateur de manire à ce que les extrémités du levier de commande (3) et du levier de sécurité (2) soient rapprochées.

2. Vanne selon la revendication 1, dans laquelle le levier de sécurité (2) est muni de moyens de rappel garantissant que l'organe de commande (3) peut pivoter librement sans provoquer un déplacement du dispositif d'obturation (1) lorsque ledit levier de sécurité (2) n'est pas actionné.

3. Vanne selon l'une des revendications précédentes, dans laquelle la pièce d'accouplement (4) est munie d'encoches (5) dans lesquelles peut s'engager une pièce reliée au levier de sécurité (2) lorsque celui-ci est actionné.

4. Vanne selon l'une des revendications précédentes, dans laquelle le levier de sécurité est capable de se déplacer approximativement parallèlement à l'axe de rotation.

5. Vanne selon l'une des revendications 1 à 3, comprenant une pièce d'accouplement (4'') substantiellement cylindrique, concentrique à l'axe de rotation, dont la position détermine de manière univoque la position du dispositif d'obturation (1), présentant une gorge circulaire (7) comportant des élargissements localisés (5), et dans laquelle le dispositif de sécurité comprend un levier de sécurité (2'') capable de coulisser perpendiculairement à l'axe de rotation, muni d'une protubérance (6) s'engageant dans la gorge (7) de telle façon que:
- lorsque le levier de sécurité (2'') n'est soumis à aucune force extérieure, la protubérance (6) peut circuler librement dans la gorge (7), et l'organe de commande (3'') peut donc pivoter indépendamment de la pièce d'accouplement (4''), sans provoquer le déplacement du dispositif d'obturation (1), alors que
- lorsque le levier de sécurité (2'') est déplacé par un opérateur de façon à ce qu'il s'éloigne de l'axe de rotation, la protubérance (6) s'engage dans un élargissement localisé (5) de la gorge (7), de telle sorte qu'un déplacement de l'organe de l'organe de commande (3'') provoque le pivotement de la pièce d'accouplement (4'') et donc le déplacement du dispositif d'obturation (1).
